# EUROPEAN PATENT APPLICATION

(11) **EP 4 365 832 A1**
(43) Date of publication of application: **08.05.2024**
(21) Application number: 22832801.9
(22) Date of filing: 14.06.2022
(51) Int. Cl.: G06T 7/00, G06V 40/16

(54) **FACIAL RECOGNITION DEVICE AND FACIAL RECOGNITION METHOD**

(30) Priority: 28.06.2021 JP 2021106927
(71) Applicant: Panasonic Intellectual Property Management Co., Ltd., Kadoma-shi, Osaka 571-0057 (JP)
(72) Inventor: TSUTSUMI, Ryuta, Kadoma-shi, Osaka 571-0057 (JP); TOMOZOE, Yusuke, Kadoma-shi, Osaka 571-0057 (JP)
(74) Representative: Eisenführ Speiser
(86) International application number: PCT/JP2022/023727
(87) International publication number: WO 2023/276645

(57) **Abstract**

A facial recognition device includes: an image data receiving unit that receives image data showing an object from a camera; an image generation unit that generates projection image data of a projection image projected onto the object according to the image data; a projection image data transmission unit that transmits the projection image data to a projector for projecting the projection image onto the object; a projected object image data receiving unit that receives, from the camera, projected object image data of the object on which the projection image is projected; and a facial recognition unit that performs facial recognition processing of the object according to the projected object image data.

## Description

### Technical Field

The present disclosure relates to a face authentication apparatus and a face authentication method.

### Background Art

Patent Literature (hereinafter, referred to as PTL) 1 discloses a face authentication apparatus that performs face authentication on users passing through a gate or the like.

PTL 2 discloses an illumination system that illuminates a subject whose image is to be captured with a camera. The illumination system of PTL 2 is a system that illuminates a subject but not the eyes of the subject to reduce the glare of the illumination light for the subject. PTL 2 discloses that only the brightness of the light applied to the subject is adjusted in accordance with the environmental light.

### Citation List

### Patent Literature

PTL 1
   Japanese Patent Application Laid-Open No. 2020-205117
PTL 2
   Japanese Patent Application Laid-Open No. 2017-111994

### Summary of Invention

In face authentication, authentication accuracy may vary depending on the influence of light hitting a subject's face, so controlling the light applying to the subject's face is important.

Non-limiting examples of the present disclosure facilitate providing a face authentication apparatus and a face authentication method that improve the authentication accuracy of face authentication by controlling the light to be applied to a subject's face.

A face authentication apparatus according to an embodiment of the present disclosure includes an image data receiver that receives image data including a captured image of a subject from a camera; an image generator that generates, based on the image data, projection image data of a projection image to be projected onto the subject; a projection image data transmitter that transmits the projection image data to a projector configured to project the projection image onto the subject; a projection subject image data receiver that receives projection subject image data from the camera, the projection subject image data being of the subject onto which the projection image is projected; and a face authenticator that performs face authentication processing on the subject based on the projection subject image data.

A face authentication method according to an embodiment of the present disclosure includes receiving image data including a captured image of a subject from a camera including a captured image of a subject from a camera; generating, based on the image data, projection image data of a projection image to be projected onto the subject; transmitting the projection image data to a projector configured to project the projection image onto the subject; receiving projection subject image data from the camera, the projection subject image data being of the subject onto which the projection image is projected; and performing face authentication processing on the subject based on the projection subject image data.

It should be noted that general or specific embodiments may be implemented as a system, an apparatus, a method, an integrated circuit, a computer program, or a storage medium, or any selective combination of a system, an apparatus, a method, an integrated circuit, a computer program, and a storage medium.

A face authentication apparatus according to an embodiment of the present disclosure is capable of improving the authentication accuracy of face authentication by controlling the light to be applied to a subject's face.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawing

FIG. 1 illustrates an example of a face authentication system according to Embodiment 1;
FIG. 2 illustrates an exemplary block configuration of a face authentication apparatus;
FIG. 3 illustrates an example of a subject's face onto which the image of a projector is projected;
FIG. 4 illustrates an example of the subject's face onto which the image of a projector is projected;
FIG. 5 illustrates an example where the brightness of the subject's face is not uniform;
FIG. 6 illustrates an example of the subject's face onto which the image of a projector is projected;
FIG. 7 is a flowchart illustrating an exemplary operation of the face authentication apparatus;
FIG. 8 is a flowchart illustrating an exemplary operation of a face authentication apparatus according to Embodiment 2; and
FIG. 9 is a flowchart illustrating an exemplary operation of a face authentication apparatus according to Embodiment 3.

### Description of Embodiments

Embodiments of the present invention will be described below in detail with reference to the accompanying drawings as appropriate. It is, however, noted that a description made in detail more than necessary is omitted in some cases. For example, a detailed description of an already well-known item and a duplicate description of substantially the same configuration are omitted in some cases. The reason for this is to prevent the following description from being unnecessarily redundant and allow a person skilled in the art to readily understand the present disclosure.

The accompanying drawings and the following descriptions are provided to allow a person skilled in the art to fully understand the present disclosure and are not intended to limit the subject set forth in the appended claims.

### Embodiment 1

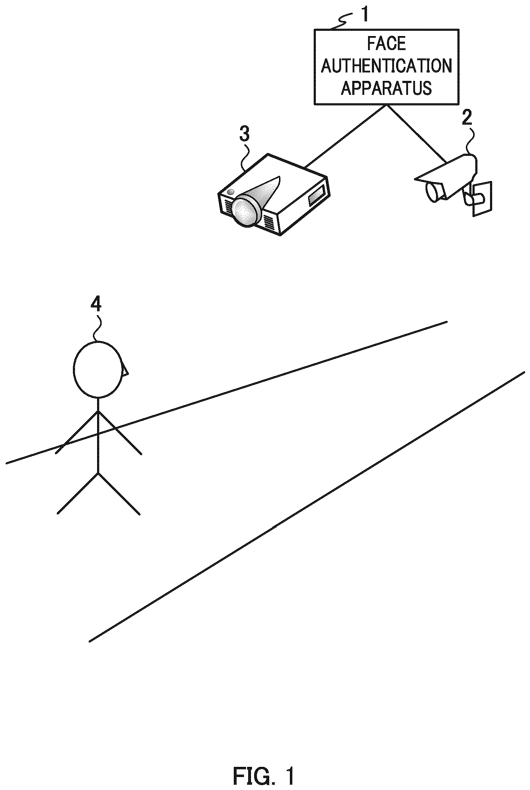

FIG. 1 illustrates an example of a face authentication system according to Embodiment 1. As illustrated in FIG. 1, the face authentication system includes face authentication apparatus 1, camera 2, and projector 3. FIG. 1 also illustrates subject 4 to be subjected to face authentication.

The face authentication system is installed inside or outside a building, for example, and performs face authentication processing on subject 4 passing through a predetermined location inside or outside the building. The face authentication system is used, for example, in an entrance/exit system that determines the entry/exit authority of subject 4 or an attendance system that manages the attendance of subject 4 by using the face authentication result of the face authentication system. Face authentication apparatus 1 may be installed at a location different from where camera 2 and projector 3 are installed.

Face authentication apparatus 1, camera 2, and projector 3 are each connected to a network such as a local area network (LAN) or the Internet. Face authentication apparatus 1, camera 2, and projector 3 communicate via the network. Face authentication apparatus 1 may be, for example, an information processor such as a server or a personal computer.

Face authentication apparatus 1 receives image data captured by camera 2. The image data captured by camera 2 may be moving image data. Face authentication apparatus 1 generates image data of an image to be projected onto subject 4 from projector 3, based on image data including subject 4. Face authentication apparatus 1 transmits the generated image data to projector 3.

Projector 3 projects an image, based on the image data transmitted from face authentication apparatus 1, onto subject 4. The image projected onto subject 4 by projector 3 may be considered as illumination light for face authentication.

Camera 2 captures the image of subject 4 onto which the image (light) from projector 3 is projected, and transmits the captured image data to face authentication apparatus 1.

Face authentication apparatus 1 receives from camera 2 image data including subject 4, onto which the image from projector 3 is projected. Face authentication apparatus 1 performs face authentication on subject 4 based on image data of subject 4, onto which the image from projector 3 is projected.

That is, in the face authentication system illustrated in FIG. 1, camera 2 is used as a camera for face authentication, and also as a sensor for controlling light to be projected onto subject 4. Projector 3 is used as a flexible illumination device that changes the brightness or color of the light to be projected onto subject 4.

Face authentication apparatus 1 controls the image (light) to be projected by projector 3 based on the image data of subject 4 captured by camera 2. Face authentication apparatus 1 then performs face authentication processing on subject 4 based on image data from camera 2, which is obtained by projecting an image from projector 3 onto subject 4 and then capturing the image of subject 4 by camera 2.

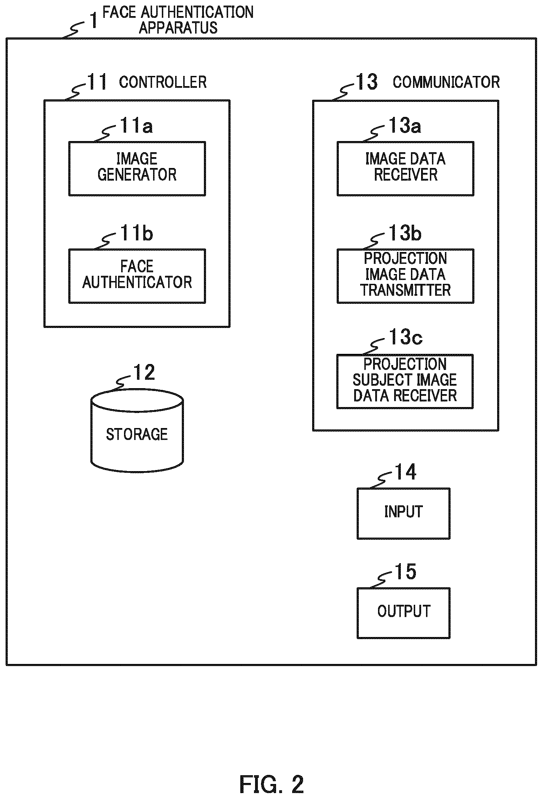

FIG. 2 illustrates an exemplary block configuration of face authentication apparatus 1. As illustrated in FIG. 2, face authentication apparatus 1 includes controller 11, storage 12, communicator 13, input 14, and output 15.

Controller 11 controls the entire face authentication apparatus 1. Controller 11 may be configured by, for example, a processor such as a central processing unit (CPU).

Controller 11 includes image generator 11a and face authenticator 11b. Image generator 11a generates image data to be output to projector 3 based on image data of an image including subject 4 captured by camera 2. Face authenticator 11b performs face authentication on subject 4 based on image data from camera 2, which is obtained by projecting an image by projector 3 onto subject 4 and then capturing the image of subject 4 by camera 2. For example, controller 11 may execute a program stored in storage 12 to achieve the functions of image generator 11a and face authenticator 11b.

Storage 12 stores programs for controller 11 to operate. Storage 12 also stores data for controller 11 to perform calculation processing and to control each processor.

Communicator 13 is connected to a network such as a LAN or the Internet. Communicator 13 communicates with camera 2 via the network. Communicator 13 communicates with projector 3 via the network. Communicator 13 communicates with the entrance/exit system or the attendance system via the network.

Communicator 13 includes image data receiver 13a, projection image data transmitter 13b, and projection subject image data receiver 13c. Image data receiver 13a receives image data from camera 2. Projection image data transmitter 13b transmits projection image data (namely, data of an image to be projected) to projector 3. Projection subject image data receiver 13c receives projection subject image data (namely, image data of the subject subjected to the projection) from camera 2.

Input 14 is connected to an input device such as a keyboard or a touch panel, for example. Input 14 outputs a signal received from the input device to controller 11.

Output 15 is connected to a display device such as a display or a touch panel, for example. Output 15 outputs a signal received from controller 11 to the display device.

Exemplary processing of generation of image for projector 3 and of face authentication in face authentication apparatus 1 will be described. In addition, hereinafter, image data of an image transmitted from face authentication apparatus 1 to projector 3 and projected onto subject 4 may be referred to as projection image data. Furthermore, image data from camera 2, which is obtained by projecting an image from projector 3 onto subject 4 and then capturing the image of subject 4 by camera 2, may be referred to as projection subject image data.

### - Example 1

Face authentication apparatus 1 generates projection image data for correcting the brightness or color of the eye area of subject 4 wearing glasses, based on image data of subject 4 captured by camera 2. Herein, the colors may include hues, color shades, and patterns.

For example, face authentication apparatus 1 determines whether or not subject 4 is wearing glasses based on the image data of subject 4 captured by camera 2. Determining whether or not subject 4 is wearing glasses can be achieved, for example, by using a machine learning model that is trained on images of faces wearing glasses through machine learning such as deep learning or by checking with the use of pattern matching whether or not a pattern corresponding to glasses is included in the image data. When face authentication apparatus 1 determines that subject 4 is wearing glasses, face authentication apparatus 1 generates projection image data in which the image of the eye area (glasses area) of subject 4 is masked. More specifically, face authentication apparatus 1 generates projection image data in which no image (light) is projected onto the eye area of subject 4, but an image is projected onto a portion other than the eye area.

Face authentication apparatus 1 outputs the generated projection image data to projector 3. Projector 3 projects an image based on the projection image data received from face authentication apparatus 1 onto subject 4.

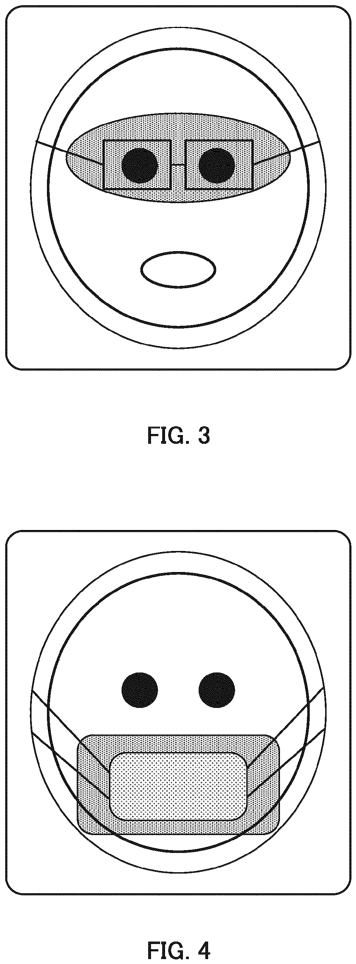

FIG. 3 illustrates an example of the subject 4's face onto which the image from projector 3 is projected. In FIG. 3, subject 4 is wearing glasses.

When subject 4 is wearing glasses, no image (light) from projector 3 is projected onto the eye area of the subject 4's face. Therefore, the eye area of subject 4 becomes darker than the portion other than the eye area.

Camera 2 captures an image of subject 4 onto which the image from projector 3 is projected, and transmits the projection subject image data to face authentication apparatus 1. Face authentication apparatus 1 performs face authentication of subject 4 based on the projection subject image data received from camera 2.

The image from projector 3 is not projected onto the eye area of subject 4. Therefore, reflection of light by the glasses is reduced. That is, in the face authentication processing, reflected light from the glasses, which becomes noise, can be reduced. In the face authentication processing, the eyes and pupils may be used as characteristic parts of subject 4; thus when the highlights of the glasses hide these parts, the accuracy of face authentication decreases. In the present embodiment, the reflected light from the glasses can be reduced; thus, it is also possible to prevent a decrease in accuracy due to such causes. Such a configuration allows face authentication apparatus 1 to improve the authentication accuracy of face authentication.

Glasses considered in the present embodiment are not limited to general vision correction glasses, and various glasses may be used. For example, the "glasses" of the present embodiment also include glasses with colored lenses, such as sunglasses, and glasses intended for eye protection, such as goggles. When subject 4 is wearing sunglasses, or the like, the eyes of subject 4 may be covered, thereby preventing camera 2 to capture the image of the eyes. In the present embodiment, reflected light becoming noise in the face authentication processing can be reduced; therefore, the accuracy of the face authentication processing is improved compared to the case where simple illumination is projected, also in such a case.

In the above description, face authentication apparatus 1 generates projection image data in which the eye area of subject 4 is masked, but the present invention is not limited thereto. When face authentication apparatus 1 determines that subject 4 is wearing glasses, face authentication apparatus 1 may generate projection image data in which the brightness of the image of the eye area of subject 4 is lower than the brightness of the image of the portion other than the eye area of subject 4.

In addition, when subject 4 is wearing glasses, face authentication apparatus 1 may generate projection image data of a color that reduces reflection of light by the glasses. For example, face authentication apparatus 1 may generate projection image data in which the eye area of subject 4 is gray.

Furthermore, face authentication apparatus 1 may generate projection image data in which the pupil area of subject 4 is masked, regardless of whether subject 4 is wearing glasses or not. Such a configuration allows face authentication apparatus 1 to prevent subject 4 from feeling the light from projector 3 too bright.

When subject 4 feels the light from projector 3 is too bright, subject 4 may close his or her eyes, which may make difficult to use eye characteristics in the face authentication processing. In the present embodiment, projection image data, in which the pupil area of subject 4 is masked, is generated; therefore, it is possible to prevent a decrease in the accuracy of face authentication processing, which would be caused by subject 4 closing his or her eyes.

### - Example 2

Face authentication apparatus 1 generates projection image data for correcting the brightness or color of the mouth area of subject 4 wearing a mask, based on image data of subject 4 captured by camera 2.

For example, face authentication apparatus 1 determines whether or not subject 4 is wearing a mask from the image data of subject 4 captured by camera 2. Determining whether or not subject 4 is wearing a mask can be achieved, for example, by using a machine learning model that is trained on images of faces wearing masks through machine learning such as deep learning or by checking with the use of pattern matching whether or not a pattern corresponding to a mask is included in the image data. When face authentication apparatus 1 determines that subject 4 is wearing a mask, face authentication apparatus 1 generates projection image data based on the color of the mask. For example, when the color of the mask is white, face authentication apparatus 1 generates projection image data of a predetermined color different from white, such as gray, at the mouth area of subject 4.

Face authentication apparatus 1 outputs the generated projection image data to projector 3. Projector 3 projects an image based on the projection image data received from face authentication apparatus 1 onto subject 4.

FIG. 4 illustrates an example of the subject 4's face onto which the image from projector 3 is projected. In FIG. 4, subject 4 is wearing a white mask.

When subject 4 is wearing a white mask, projector 3 projects a gray image onto the mouth area of the subject 4's face, for example. Therefore, the color of the mask worn by subject 4 becomes gray.

Camera 2 captures an image of subject 4 onto which the image from projector 3 is projected, and transmits the projection subject image data to face authentication apparatus 1. Face authentication apparatus 1 performs face authentication of subject 4 based on the projection subject image data received from camera 2.

In this example, projector 3 projects a gray image onto the mouth area of the subject 4's face. Overexposure of the image which would be caused by the white mask can be thus prevented.

Overexposure is a phenomenon in which the luminance of a subject is so high that it exceeds the range in which the image sensor of camera 2 can distinguish color gradations, resulting in the image being recognized as white. When subject 4 is wearing a mask, although part of the face is hidden, the distribution of shadows derived from the three-dimensional shape of the face differs for each individual, so the colors corresponding to these shadows can be used for face authentication. However, when overexposure occurs, color information corresponding to these shadows is also lost, resulting in a decrease in the accuracy of face authentication. In the present embodiment, when a mask is detected, the color projected onto the mouth area is darkened to prevent overexposure. Such a configuration allows face authentication apparatus 1 to improve the authentication accuracy of face authentication.

In the above description, face authentication apparatus 1 generates projection image data of a color different from white, such as gray, for the mouth area of subject 4, but the present invention is not limited thereto. Face authentication apparatus 1 may generate projection image data of an image in which the mouth area of subject 4 is masked.

In addition, face authentication apparatus 1 may generate projection image data even when the color of the mask is not white. For example, face authentication apparatus 1 may select a color that reduces or prevents overexposure and/or reflection according to the color of the mask, and generate projection image data for projecting an image of the selected color onto the mouth area of subject 4.

In addition, the above embodiment may be applied to a mask that is not solid white. This is because overexposure can occur in any bright color.

The mask in the present embodiment has been described as a mask that covers the mouth; however, the present embodiment may be used for a mask that covers another part of the face, for example. This is because also in this case when overexposure occurs, the color gradations in that area is lost, and the accuracy of face authentication processing decreases. For a mask that covers an area other than the mouth, it is sufficient to darken the color of the portion of the projection image data that corresponds to the area covered by the mask.

### - Example 3

For example, depending on the installation location of camera 2, the brightness of the subject 4's face may become non-uniform. For example, when camera 2 is installed at a location that admits outdoor light from only one direction, or when camera 2 is installed at a location where illumination light is emitted from only one direction, the brightness of the subject 4's face may become non-uniform. In such a case, face authentication apparatus 1 analyzes the intensity of brightness on the subject 4's face based on the image data captured by camera 2, and generates projection image data in so that the brightness of the entire subject 4's face becomes uniform.

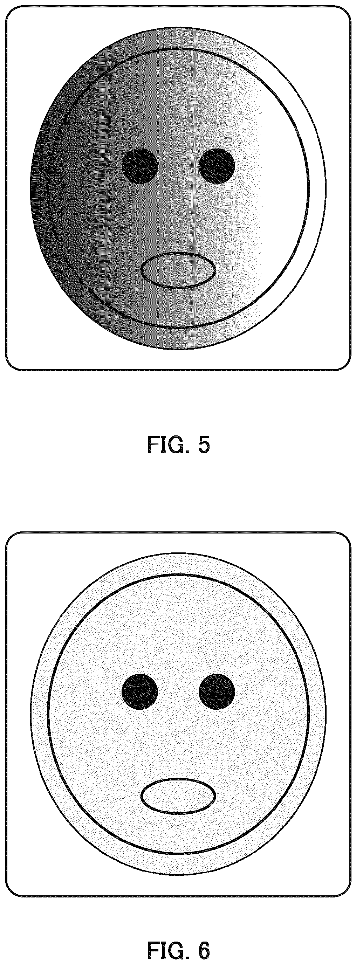

FIG. 5 illustrates an example where the brightness of the subject 4's face is not uniform. In FIG. 5, the subject 4's face is illuminated from the right side when subject 4 is viewed from the front. Therefore, when the subject 4's face is viewed from the front, the right side is brighter than the left side. That is, the brightness of the subject 4's face is not uniform.

Face authentication apparatus 1 analyzes the intensity of light illuminating the subject 4's face from the image data of subject 4 captured by camera 2. Face authentication apparatus 1 generates projection image data in such a way that the brightness becomes uniform over the entire subject 4's face based on the analysis result of the intensity of light.

For example, face authentication apparatus 1 generates projection image data of a color that allows the brightness to become uniform over the entire subject 4's face. More specifically, face authentication apparatus 1 generates projection image data so that an image of a bright color is projected onto a portion of the subject 4's face illuminated by weak light. Face authentication apparatus 1 generates projection image data so that an image of a dark color is projected onto a portion of the subject 4's face illuminated by strong light.

Face authentication apparatus 1 outputs the generated projection image data to projector 3. Projector 3 projects an image based on the projection image data received from face authentication apparatus 1 onto subject 4.

FIG. 6 illustrates an example of the subject 4's face onto which the image from projector 3 is projected. As explained in FIG. 5, when the right side of the subject 4's face is brighter than the left side thereof when viewed from the front, face authentication apparatus 1 generates projection image data in such a way that an image of a dark color is projected on the right side of the subject 4's face. In addition, face authentication apparatus 1 generates projection image data in such a way that an image of a bright color is projected on the left side of the subject 4's face. Such a configuration allows uniform brightness on the subject 4's face onto which the image from projector 3 is projected, as illustrated in FIG. 6.

Camera 2 captures an image of subject 4 onto which the image from projector 3 is projected, and transmits the projection subject image data to face authentication apparatus 1. Face authentication apparatus 1 performs face authentication of subject 4 based on the projection subject image data received from camera 2.

For the use in face authentication, face image data to be compared with the projection subject image data is generally captured in advance in a place with suitable lighting equipment and the like, and is registered in storage 12. Therefore, face images included in face image data to be used for face authentication generally have uniform brightness. When face authentication is performed by comparing face image data with uniform face brightness and projection subject image data with non-uniform face brightness, the authentication accuracy of face authentication may decrease.

As explained in FIG. 6, the subject 4's face onto which the image from projector 3 is projected has uniform brightness. Therefore, face authentication apparatus 1 performs face authentication based on face image data with uniform face brightness registered in advance in storage 12 and projection subject image data of subject 4 whose brightness has been corrected to be uniform by the projection image from projector 3. Such a configuration allows face authentication apparatus 1 to improve the authentication accuracy of face authentication.

### - Example 4

For example, the face color and hair color of subject 4 change depending on the color of the illumination light. For example, when the illumination light is red, the face color and hair color of subject 4 may appear reddish. That is, the face color and hair color of subject 4 may differ from the face color and hair color of facial image data registered in advance in storage 12 depending on the color of the illumination light. Face authentication apparatus 1 analyzes the face color or hair color of subject 4 based on the image data captured by camera 2, and generates projection image data so that the face color or hair color of subject 4 becomes a predetermined color.

For example, when the entire subject 4's face appears reddish, face authentication apparatus 1 generates projection image data in such a way that the face color or hair color of subject 4 becomes the color under white light.

Face authentication apparatus 1 outputs the generated projection image data to projector 3. Projector 3 projects an image based on the projection image data received from face authentication apparatus 1 onto subject 4.

Camera 2 captures an image of subject 4 onto which the image from projector 3 is projected, and transmits the projection subject image data to face authentication apparatus 1. Face authentication apparatus 1 performs face authentication of subject 4 based on the projection subject image data received from camera 2.

A face image for face authentication is generally captured in advance in a place with suitable lighting equipment and the like, for example, under white light. Face authentication apparatus 1 performs face authentication based on face image data for face authentication captured under white light and projection subject image data of subject 4 whose face color and/or hair color has been corrected by the projection image from projector 3. Such a configuration allows face authentication apparatus 1 to improve the authentication accuracy of face authentication.

### - Example 5

Face authentication apparatus 1 may generate projection image data based on image data (background image data) of a background image (an image of a portion other than the face or body of subject 4) of the image captured by camera 2. For example, when there is a background of a specific color (such as blue) behind subject 4 when viewed from camera 2, the authentication accuracy of face authentication may decrease. In face authentication processing, processing is performed using the entire image without distinguishing between the face and the background; therefore, when the background color is significantly different from the background color of the registered image, the accuracy of authentication may decrease. In such a case, face authentication apparatus 1 generates projection image data in such a way that the background behind subject 4 has a color different from the specific color (e.g., blue in this case). Such a configuration allows face authentication apparatus 1 to improve the authentication accuracy of face authentication.

When the background colors of the face image data for face authentication registered in storage 12 are substantially the same color, the projection image data may be generated so that the background behind subject 4 approaches this color. For example, when images of many people are captured for registration at approximately the same location, such as at the occasion of enrollment in school or joining a company, the background colors are likely to be similar to each other. By adjusting the color of the projection image data so that the background color during authentication approaches this color, it is expected that the accuracy of face authentication would improve. In this case, the background color of the registered image data may be specified by the user in advance, or may be determined by analyzing the registered image data with the use of face authentication apparatus 1 or the like.

The above color is not limited to a single color, and may be a pattern made of a plurality of colors. That is, projection image data may be generated in such a way that the background pattern is different from a specific pattern. As with the explanation about color, a pattern significantly different from the background of a registered image may reduce authentication accuracy; thus, it is useful to generate projection image data that has a pattern different from such a pattern. In addition, when there is a pattern resembling a face or a part thereof (for example, an image that looks like an eye), projection image data that changes the pattern may be generated. This is because when such a pattern is in the background, the pattern may be mistakenly recognized as the subj ect 4's face or a part thereof, resulting in a decrease in the accuracy of face authentication.

The generation of projection image data described in Examples 1 to 5 above is merely an example, and the present invention is not limited thereto. In addition, the methods for generating projection image data in Examples 1 to 5 may be combined.

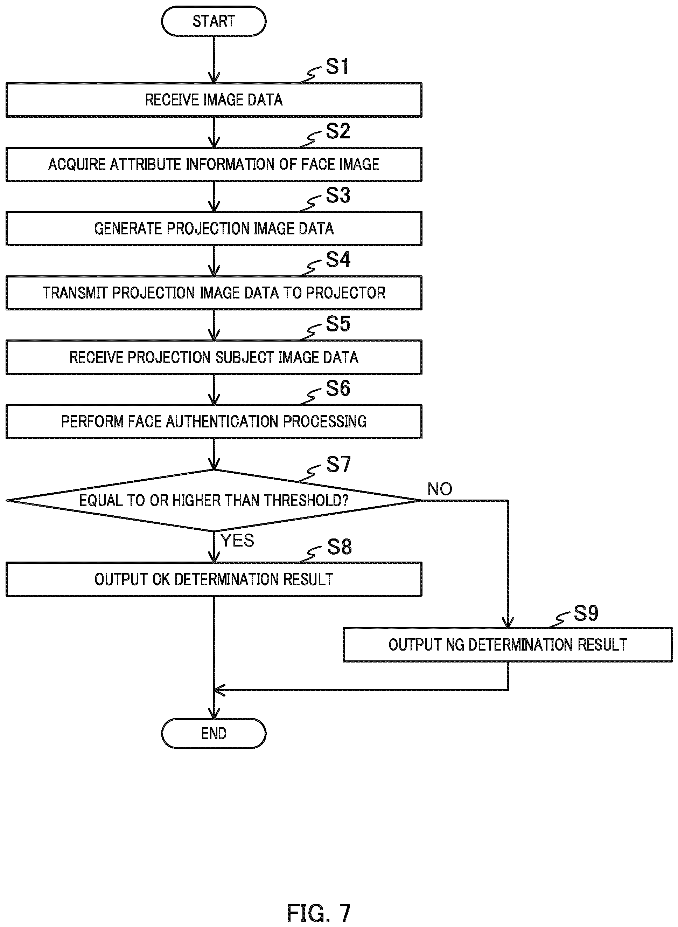

FIG. 7 is a flowchart illustrating an exemplary operation of face authentication apparatus 1. Face authentication apparatus 1 repeatedly executes, for example, the processing of the flowchart in FIG. 7 at a predetermined period.

Face authentication apparatus 1 receives image data from camera 2 (S1).

Face authentication apparatus 1 acquires attribute information regarding the subject 4's face from the image data received in S1 (S2). For example, face authentication apparatus 1 acquires facial attribute information such as glasses, mask, face brightness, complexion, and hair color from the face image of subject 4.

Face authentication apparatus 1 generates projection image data based on the facial attribute information of subject 4 acquired in S2 (S3).

Face authentication apparatus 1 transmits the projection image data generated in S3 to projector 3 (S4).

Projector 3 projects an image based on the projection image data transmitted from face authentication apparatus 1. The image from projector 3 is projected onto subject 4.

Face authentication apparatus 1 receives projection subject image data from camera 2 (S5).

Face authentication apparatus 1 performs face authentication processing based on the face image of subject 4 included in the projection subject image data received in S5 (S6). Face authentication apparatus 1 may perform the face authentication processing by using a conventional face authentication processing. For example, face authentication apparatus 1 may calculate the degree of matching by comparing the face image data for face authentication registered in storage 12 in advance with the image data of the face image of subject 4 included in the projection subject image data received in S5. Face authentication apparatus 1 may calculate the degree of matching by using machine learning such as deep learning, for example.

Face authentication apparatus 1 determines whether or not the degree of matching calculated in S6 is equal to or higher than a threshold (S7).

When face authentication apparatus 1 determines that the degree of matching calculated in S6 is equal to or higher than the threshold ("YES" in S7), face authentication apparatus 1 outputs an OK determination result to, for example, an attendance system or an entrance/exit system (S8). Face authentication apparatus 1 then ends the processing of the flowchart in FIG. 7. The OK determination result indicates, for example, that the face image of subject 4 in the projection subject image data received in S5 matches the face image of the face image data registered in advance in storage 12.

On the other hand, when face authentication apparatus 1 determines that the degree of matching calculated in S6 is lower than the threshold ("NO" in S7), the face authentication device 1 outputs an NG determination result to, for example, the attendance system or the entrance/exit system (S9). Face authentication apparatus 1 then ends the processing of the flowchart in FIG. 7. The NG determination result indicates, for example, that the face image of subject 4 in the projection subject image data received in S5 does not match the face image of the face image data registered in advance in storage 12.

As described above, image data receiver 13a of face authentication apparatus 1 receives image data showing subject 4 from camera 2 (i.e., including a captured image of subject 4 from camera 2). Image generator 11a generates projection image data of a projection image to be projected onto subject 4 based on the image data. Projection image data transmitter 13b transmits the projection image data to projector 3 configured to project the projection image onto subject 4. Projection subject image data receiver 13c receives from camera 2 the projection subject image data of subject 4 onto which the projection image is projected. Face authenticator 11b then performs face authentication processing on the subject based on the projection subject image data.

In this manner, face authentication apparatus 1 controls the image (light) to be projected onto subject 4 by projector 3 based on the image data of subject 4 captured by camera 2, thereby improving the authentication accuracy of face authentication.

In addition, face authentication apparatus 1 controls the light to be projected onto subject 4 by projector 3 based on the image data of subject 4 captured by camera 2; therefore, controlling the parameters of camera 2 to correct the projection subject image data is not necessary. For example, face authentication apparatus 1 does not need to control the parameters of camera 2 to correct the brightness and/or color shade of the image of the projection subject image data. As a result, face authentication apparatus 1 can easily improve the authentication accuracy of face authentication.

Further, face authentication apparatus 1 uses camera 2 as a camera for face authentication and also as a sensor for controlling light to be projected onto subject 4. This configuration reduces the cost of the face authentication system.

Face authentication apparatus 1 may calculate the distance between the illumination device and subject 4 from the image data from camera 2. Face authentication apparatus 1 may generate projection image data for correcting the brightness or color of the subject 4's face based on the calculated distance.

In addition, face authentication apparatus 1 may store a plurality of different projection image data in storage 12 in advance. Face authentication apparatus 1 may select projection image data stored in advance in storage 12 based on the image data from camera 2.

Further, the image captured by camera 2 may include a plurality of subjects 4. In this case, face authentication apparatus 1 generates projection image data for each of subjects 4 based on the image data of the plurality of subjects 4. Face authentication apparatus 1 then performs face authentication processing for the plurality of subjects onto which images are projected by projector 3.

In this case, the projection image data may be one piece of image data including images for the subjects in regions corresponding to the subjects, respectively. Such a configuration allows one projector 3 to be used for a large number of subjects 4. Each of a plurality of projectors 3 may project projection image data for one or more subjects 4. By doing so, parameters such as the focal length of each projector 3 can be adjusted individually, so that projection image data can be accurately projected onto each subject.

Face authentication apparatus 1 may be formed from a plurality of devices. For example, face authentication apparatus 1 may be formed from a server that generates projection image data and a server that performs face authentication processing.

### Embodiment 2

In Embodiment 1, face authentication apparatus 1 generated one piece of projection image data from the image data of one image captured by camera 2. In Embodiment 2, face authentication apparatus 1 generates N (N is an integer of 1 or more) pieces of different projection image data (N types of projection image data) (that is, N pieces of projection image data different from each other) from the image data of one image captured by camera 2. After the images of the N pieces of projection image data are projected onto subject 4, face authentication apparatus 1 performs face authentication processing based on N pieces of projection subject image data.

The system configuration and block configuration of face authentication apparatus 1 in Embodiment 2 are the same as the system configuration and block configuration described in Embodiment 1, and the description thereof will be omitted.

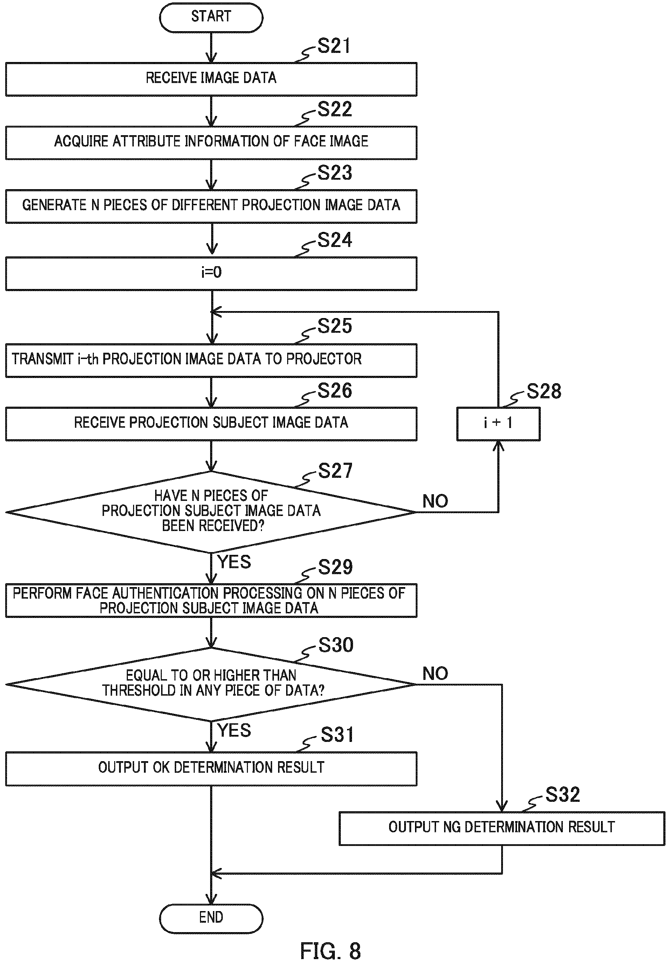

FIG. 8 is a flowchart illustrating an exemplary operation of face authentication apparatus 1 according to Embodiment 2. Face authentication apparatus 1 repeatedly executes, for example, the processing of the flowchart in FIG. 8 at a predetermined period.

Face authentication apparatus 1 receives image data from camera 2 (S21).

Face authentication apparatus 1 acquires attribute information regarding the subject 4's face from the image data received in S21 (S22). For example, face authentication apparatus 1 acquires facial attribute information such as glasses, mask, face brightness, complexion, and hair color from the face image of subject 4.

Face authentication apparatus 1 generates N pieces of different projection image data based on the facial attribute information of subject 4 acquired in S22 (S23). For example, face authentication apparatus 1 generates N pieces of projection image data each having different brightness. Alternatively, face authentication apparatus 1 generates N pieces of projection image data each having different color. Alternatively, face authentication apparatus 1 generates N pieces of projection image data each having different brightness and color.

Face authentication apparatus 1 initializes a variable i to 0 (S24).

Face authentication apparatus 1 transmits the i-th projection image data to projector 3 (S25).

Projector 3 projects an image based on the projection image data transmitted from face authentication apparatus 1. The image from projector 3 is projected onto subject 4.

Face authentication apparatus 1 receives projection subject image data from camera 2 (S26).

Face authentication apparatus 1 determines whether or not N pieces of projection subject image data have been received (S27). That is, face authentication apparatus 1 determines whether or not the pieces of projection subject image data of subject 4, onto which images of N pieces of different projection image data are projected, are received from camera 2.

When face authentication apparatus 1 determines that the N pieces of projection subject image data has not been received from camera 2 ("NO" in S27), face authentication apparatus 1 adds 1 to the variable i (S28). Then, face authentication apparatus 1 moves the processing to S25, and transmits the i-th projection image data among the N pieces of projection image data generated in S23 to projector 3.

On the other hand, when face authentication apparatus 1 determines that the N pieces of projection subject image data have been received from camera 2 ("YES" in S27), face authentication apparatus 1 performs face authentication processing on each of the N pieces of projection subject image data received from camera 2 (S29). Face authentication apparatus 1 performs face authentication processing, for example, by the method described in S6 in FIG. 7.

Face authentication apparatus 1 determines whether or not the degree of matching exceeds a threshold in any one of the N pieces of projection subject image data (S30).

When face authentication apparatus 1 determines that the degree of matching is equal to or higher than the threshold in any one of the projection subject image data ("YES" in S30), face authentication apparatus 1 outputs the OK determination result to, for example, the attendance system or the entrance/exit system (S31). Face authentication apparatus 1 then ends the processing of the flowchart in FIG. 8.

On the other hand, when face authentication apparatus 1 determines that the degree of matching is lower than the threshold in all of the projection subject image data ("NO" in S30), the face authentication device 1 outputs the NG determination result to, for example, the attendance system or the entrance/exit system (S32). Face authentication apparatus 1 then ends the processing of the flowchart in FIG. 8.

As described above, image generator 11a of face authentication apparatus 1 generates N pieces of different projection image data based on the image data of the image captured by camera 2. After the images of the N pieces of projection image data are projected onto subject 4, face authenticator 11b performs face authentication processing on subject 4 based on the N pieces of projection subject image data.

In this manner, face authentication apparatus 1 generates N pieces of different projection image data based on the image data of the image captured by camera 2; therefore, various images are projected onto subject 4. Face authentication apparatus 1 then performs face authentication on subject 4 based on the pieces of projection subject image data of subject 4, onto which various images are projected. As a result, face authentication apparatus 1 can further improve the authentication accuracy of face authentication.

For example, when the accuracy of face authentication of subject 4 is reduced due to multiple factors, even the use of projection image data focused on one factor cannot prevent a decrease in accuracy caused by other factors in some cases. As an example, when subject 4 is wearing glasses and a mask at the same time, it is difficult to prevent overexposure in the mask portion when projection image data only for glasses is used. On the other hand, when projection image data, in which measures are taken for all factors, is generated, the accuracy of face authentication may decrease rather than improves. For example, for prevent a decrease in accuracy by reducing the brightness of the projection image data such as in both cases of glasses and a mask, taking measures for both cases would darken most of the face; thus, face authentication itself is more likely to fail due to insufficient light intensity.

In the present embodiment, the possibility that face authentication on subject 4 will be successful is increased by generating projection image data applicable to each of the N factors. The case such that a plurality of factors are included at the same time in one of the N factors may also be possible.

In the present embodiment, after acquiring N pieces of projection subject image data, face authentication on subject 4 is performed. When the determination results using the N pieces of projection subject image data are different to each other, it thus becomes possible to prevent erroneous determination by, for example, determining the result by majority vote.

The following configuration is possible: when face authentication apparatus 1 determines in S30 of FIG. 8 that the degree of matching is equal to or higher than a threshold in a predetermined number or more of pieces (for example, 3 or more) among the N pieces of projection subject image data, face authentication apparatus 1 outputs the OK determination result. As a result, face authentication apparatus 1 can further improve the authentication accuracy of face authentication.

### Embodiment3

In Embodiment 3, face authentication apparatus 1 generates N (N is an integer of 1 or more) pieces of different projection image data based on the image data from camera 2. Every time an image of one piece of projection image data is projected onto subject 4, face authentication apparatus 1 receives projection subject image data of subject 4 from camera 2 and performs face authentication processing on subject 4.

The system configuration and block configuration of face authentication apparatus 1 in Embodiment 3 are the same as the system configuration and block configuration described in Embodiment 1, and the description thereof will be omitted.

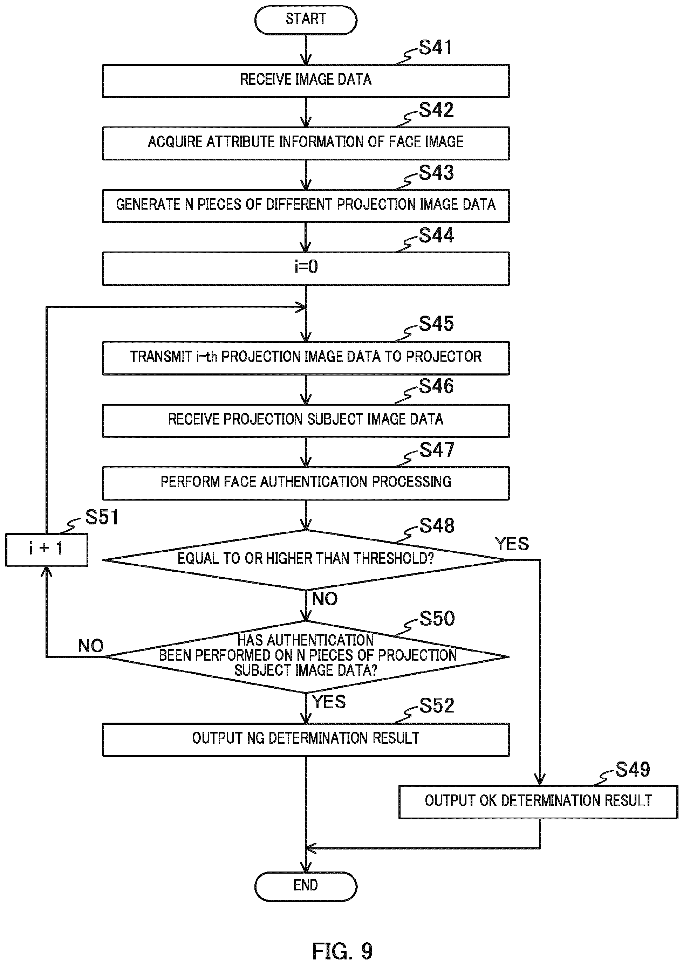

FIG. 9 is a flowchart illustrating an exemplary operation of face authentication apparatus 1 according to Embodiment 3. Face authentication apparatus 1 repeatedly executes, for example, the processing of the flowchart in FIG. 9 at a predetermined period. The processing in S41 to S44 in FIG. 9 is the same as the processing in S21 to S24 described in FIG. 8, and the explanation thereof will be omitted.

Face authentication apparatus 1 transmits the i-th projection image data to projector 3 (S45).

Projector 3 projects an image based on the projection image data transmitted from face authentication apparatus 1. The image from projector 3 is projected onto subject 4.

Face authentication apparatus 1 receives projection subject image data from camera 2 (S46).

Face authentication apparatus 1 performs face authentication processing in the projection subject image data received in S46 (S47). That is, each time one projection image is projected onto subject 4, face authentication apparatus 1 receives one piece of projection subject image data from camera 2 and performs face authentication processing. Face authentication apparatus 1 performs face authentication processing, for example, by the method described in S6 in FIG. 7.

Face authentication apparatus 1 determines whether or not the degree of matching obtained by the face authentication processing in S47 exceeds a threshold (S48).

When face authentication apparatus 1 determines that the degree of matching is equal to or higher than the threshold ("YES" in S48), face authentication apparatus 1 outputs the OK determination result to, for example, the attendance system or the entrance/exit system (S49). Face authentication apparatus 1 then ends the processing of the flowchart in FIG. 9.

On the other hand, when face authentication apparatus 1 determines that the degree of matching is lower than the threshold ("NO" in S48), face authentication apparatus 1 determines whether or not face authentication processing has been performed on the N pieces of projection subject image data (S50). That is, when face authentication apparatus 1 determines that the degree of matching is not equal to or higher than the threshold, face authentication apparatus 1 determines whether or not face authentication processing has been performed on the N pieces of projection subject image data of subject 4 onto which the images of the N pieces of projection image data generated in S43 are projected.

When face authentication apparatus 1 determines that the face authentication processing has not been performed on the N pieces of projection subject image data ("NO" in S50), face authentication apparatus 1 adds 1 to the variable i (S51). Then, face authentication apparatus 1 moves the processing to S45, and transmits the i-th projection image data among the N pieces of projection image data generated in S43 to projector 3.

On the other hand, when face authentication apparatus 1 determines that the face authentication processing has been performed on the N pieces of projection subject image data ("YES" in S50), the face authentication device 1 outputs the NG determination result to, for example, the attendance system or the entrance/exit system (S52). Face authentication apparatus 1 then ends the processing of the flowchart in FIG. 9.

As described above, image generator 11a of face authentication apparatus 1 generates N pieces of different projection image data based on the image data of the image captured by camera 2. Every time an image of one piece of projection image data is projected onto subject 4, projection subject image data of subject 4 is received from camera 2, and face authenticator 11b performs face authentication processing on subject 4.

In this manner, face authentication apparatus 1 generates N pieces of different projection image data based on the image data of the image captured by camera 2; therefore, various images are projected onto subject 4. Face authentication apparatus 1 then performs face authentication on subject 4 based on the pieces of projection subject image data of subject 4, onto which various images are projected. As a result, face authentication apparatus 1 can further improve the authentication accuracy of face authentication.

In addition, every time an image of one piece of projection image data is projected onto subject 4, face authentication apparatus 1 receives projection subject image data of subject 4 from camera 2 and performs face authentication processing on subject 4. Therefore, when the face authentication processing is successful in any one of the projection subject image data, the subsequent projection of the projection image data and the subsequent face authentication processing can be stopped. Therefore, the determination result of face authentication may be output faster than the face authentication processing in Embodiment 2.

In Embodiment 2 and Embodiment 3, N pieces of different projection image data are generated based on the attribute information of the subject 4's face; however, the evaluation of the attribute information of the subject 4's face may be omitted. For example, face authentication apparatus 1 may generate all types of projection image data that can be generated, and the processing of Embodiment 2 and Embodiment 3 may be performed by using the generated projection image data as N pieces of projection image data. In this case, predetermined default data may be used for a portion or the like of projection image data where a color or the like should be adjusted. For example, it can be inferred that glasses appear in the upper half region of a face and a mask appear in the lower half region of a face without referring to facial attribute information; thus, an image with reduced brightness in these regions may be used as default projection image data.

The following configuration is possible: when face authentication apparatus 1 determines in S48 of FIG. 9 that the degree of matching is equal to or higher than a threshold in a predetermined number or more of pieces (for example, 3 or more) of projection subject image data, face authentication apparatus 1 outputs the OK determination result. As a result, face authentication apparatus 1 can further improve the authentication accuracy of face authentication.

In the above-described embodiments, the expressions "processor," "-er," "-or," and "-ar" used for the component elements may be replaced with other expressions such as "circuit (circuitry)," "assembly," "device," "unit," or "module."

Although the embodiments have been described above with reference to the drawings, the present disclosure is not limited to such examples. It is clear that a person skilled in the art is capable of conceiving various changes and modifications within the scope of the claims. It is understood that such changes or modifications also fall within the technical scope of the present disclosure. Further, the component elements in the embodiments may be arbitrarily combined without departing from the spirit of the present disclosure.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

This application is entitled to and claims the benefits of Japanese Patent Application No. 2021-106927 dated June 28, 2021, the disclosures of which including the specification, drawings and abstract are incorporated herein by reference in its entirety.

### Industrial Applicability

The present disclosure is particularly advantageous for a system that controls the light to be applied to a subject's face and performs face authentication.

### Reference Signs List

1 Face authentication apparatus
2 Camera
3 Projector
4 Subject
11 Controller
11a Image generator
11b Face authenticator
12 Storage
13 Communicator
14 Input
15 Output

## Claims

1. A face authentication apparatus, comprising:
an image data receiver that receives image data including a captured image of a subj ect from a camera;
an image generator that generates, based on the image data, projection image data of a projection image to be projected onto the subject;
a projection image data transmitter that transmits the projection image data to a projector configured to project the projection image onto the subject;
a projection subject image data receiver that receives projection subject image data from the camera, the projection subject image data being of the subject onto which the projection image is projected; and
a face authenticator that performs face authentication processing on the subject based on the projection subject image data.

2. The face authentication apparatus according to claim 1, wherein
the image generator generates, based on the image data, the projection image data for correcting brightness or a color of an eye area of the subject wearing glasses.

3. The face authentication apparatus according to claim 1, wherein
the image generator generates, based on the image data, the projection image data for correcting brightness or a color of a mouth area of the subject wearing a mask.

4. The face authentication apparatus according to claim 1, wherein
the image generator generates, based on the image data, the projection image data so that brightness of an entire face of the subject becomes uniform.

5. The face authentication apparatus according to claim 1, wherein
the image generator generates, based on the image data, the projection image data so that a face color or a hair color of the subject becomes a predetermined color.

6. The face authentication apparatus according to claim 1, wherein
the image generator generates the projection image data based on background image data of a background behind the subject, the background image data being included in the image data.

7. The face authentication apparatus according to claim 1, wherein:
the image generator generates, based on the image data, N (N is an integer of 1 or more) pieces of the projection image data different to each other; and
after N pieces of the projection subject image data respectively obtained by projecting images of the N pieces of the projection image data onto the subject are received from the camera, the face authenticator performs the face authentication processing on the subject based on the N pieces of the projection subject image data.

8. The face authentication apparatus according to claim 1, wherein:
the image generator generates, based on the image data, N (N is an integer of 1 or more) pieces of the projection image data different to each other; and
every time an image of one piece of the projection image data is projected onto the subject, the projection subject image data of the subject is received from the camera, and the face authenticator performs the face authentication processing on the subject.

9. A face authentication method, comprising:
receiving image data including a captured image of a subject from a camera;
generating, based on the image data, projection image data of a projection image to be projected onto the subject;
transmitting the projection image data to a projector configured to project the projection image onto the subject;
receiving projection subject image data from the camera, the projection subject image data being of the subject onto which the projection image is projected; and
performing face authentication processing on the subject based on the projection subject image data.
